# EUROPEAN PATENT APPLICATION

(11) **EP 0 756 096 A2**
(43) Date of publication of application: **29.01.1997**
(21) Application number: 96305521.5
(22) Date of filing: 26.07.1996
(51) Int. Cl.: F16C 31/00

(54) **A curvilinear guide bearing**

(30) Priority: 28.07.1995 JP 193772/95
(71) Applicant: SEIKO SEIKI KABUSHIKI KAISHA, Narashino-shi Chiba (JP)
(72) Inventor: Arai, Shigehiro, Narashino-shi, Chiba (JP)
(74) Representative: Sturt, Clifford Mark

(57) **Abstract**

A curvilinear guide bearing is provided, in which an operation of integrating it to a device is facilitated and which is easy to use.

A parallel plane portion (7) is provided to a curvilinear guide main body (1). The parallel plane portion (7) is formed at an external side circular arc face (1a) of the curvilinear guide main body (1), that is, an outer ring member (3). Further, the parallel plane portion (7) is formed by flatting a portion of the curvilinear guide main body (1) and is provided in parallel with a circular arc tangent A-A of the curvilinear guide main body (1). An operation of bringing an arc centre 0₂ of the curvilinear guide main body (1) into agreement with a swivelling centre 0₁ of a swivelling device is carried out based on the parallel plane portion (7).

## Description

The present invention relates to a curvilinear guide bearing used in guiding swivelling of a swivelling object such as a table or the like, particularly to facilitating an operation of integrating thereof to a device.

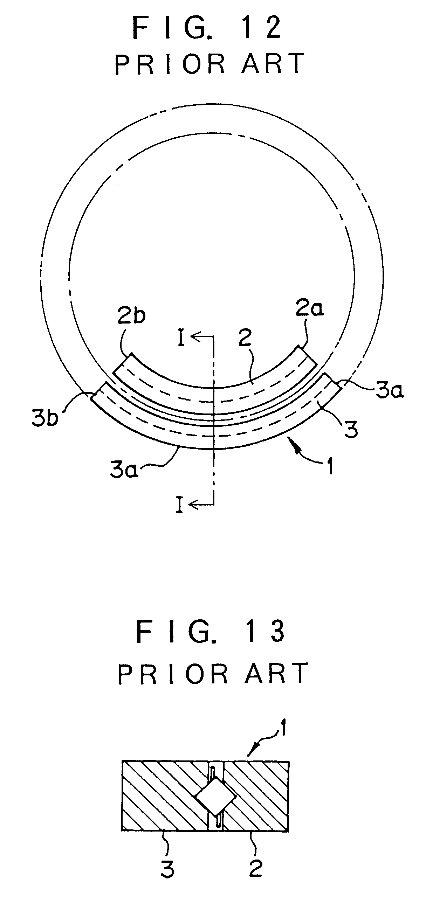

Conventionally, a curvilinear guide bearing as illustrated in Figure 12 and Figure 13 or Figure 14 and Figure 15 is used for guiding swivelling operation in a swivelling device having the structure of swivelling around a constant swivelling centre such as a table swivelling on a base.

The curvilinear guide bearing as illustrated in Figure 12 comprises a curvilinear guide main body 1 in a circular arc shape, the curvilinear guide main body 1 is constituted by an inner ring member 2 and an outer ring member 3 disposed at an external side thereof and the inner ring member 2 and the outer ring member 3 are installed mutually slidably via rollers and a roller chain. Figure 13 is a sectional view taken along a cut portion I-I of Figure 12.

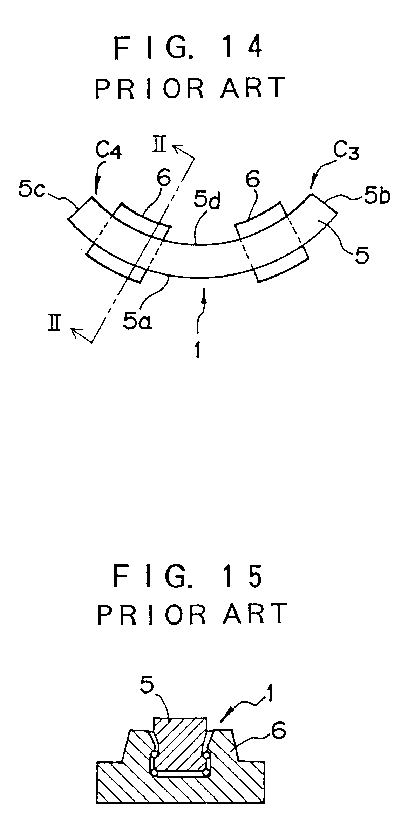

The curvilinear guide bearing illustrated in Figure 14 has a curvilinear guide main body 1 constituted by a curvilinear rail 5 in a circular arc shape and a rail carrier member 6 and the rail carrier member 6 is slidably engaged with the curvilinear rail 5 via balls. Figure 15 is a sectional view taken along a cut portion II-II in Figure 14.

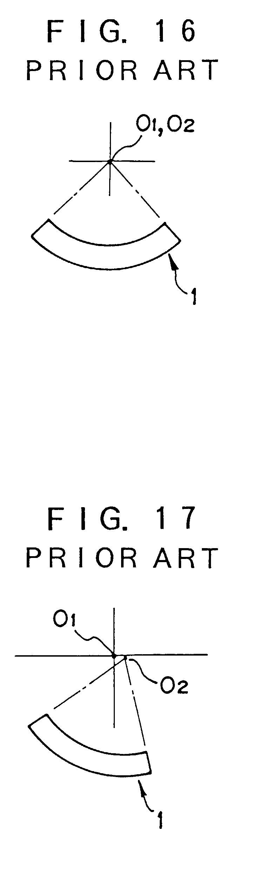

Further, when such a curvilinear guide bearing is integrated into a portion of a swivelling device and a table is swivelled around a predetermined swivelling centre 0₁, an arc centre 0₂ of the curvilinear guide main body 1 must be in agreement with the swivelling centre 0₁ as shown in Figure 16. When the positions of the swivelling centre 0₁ and the arc centre 0₂ are deviated from each other as shown by Figure 17, even if the deviation is slight, the table swivels not around the scheduled swivelling centre 0₁ but around the unscheduled arc centre 0₂ and accordingly, the desired swivelling operation cannot be obtained.

However, the outer periphery of the curvilinear guide main body 1 is all a circular arc face of a curve in the above-mentioned conventional curvilinear guide bearings and therefore, there is no erection reference in integrating it to a swivelling device, it is difficult to search for the arc centre 0₁, a long period of time is required in the integrating operation and it is difficult to use it.

The present invention has been carried out in view of the above-mentioned situation and it is an object of the present invention to provide a curvilinear guide bearing in which the integrating operation thereof to a device is facilitated and which is easy to use.

According to one aspect of the present invention, there is provided a curvilinear guide bearing comprising a curvilinear main body for guiding swivelling operation of an object and having a circular arc-shaped portion, a further portion and means for slidably engaging the portions, characterised in that the main body comprises a plane portion as a reference for integrating the guide bearing with the object.

According to another aspect of the present invention, there is provided a curvilinear guide bearing comprising a curvilinear guide main body in a circular arc shape having an inner ring member and an outer ring member disposed at an external side of the inner ring member and slidably engaged with the inner ring member, which is used for guiding a swivelling operation of a table etc., wherein an erection reference plane portion is provided to the curvilinear guide main body.

According to a further aspect of the present invention, there is provided a curvilinear bearing comprising a curvilinear guide main body having a curvilinear rail in a circular arc shape and a rail carrier member slidably engaged with the curvilinear rail, which is used for guiding a swivelling operation of a table etc;
wherein an erection reference plane portion is provided at a portion of the curvilinear rail.

According to the present invention, when the curvilinear guide bearing of this kind is used in integrating it to a portion of a swivelling device and is used for swivelling a table around a predetermined swivelling centre, the integrating operation thereof to the swivelling device can be carried out with the plane portion as the erection reference.

Embodiments of the present invention will now be described with reference to the accompanying drawings, of which:
Figure 1 is an explanatory view of an embodiment of the present invention;
Figure 2 is an explanatory view of another embodiment of the present invention;
Figure 3 is an explanatory view of another embodiment of the present invention;
Figure 4 is an explanatory view of another embodiment of the present invention;
Figure 5 is an explanatory view of another embodiment of the present invention;
Figure 6 is an explanatory view of another embodiment of the present invention;
Figure 7 is an explanatory view of another embodiment of the present invention;
Figure 8 is an explanatory view of another embodiment of the present invention;
Figure 9 is an explanatory view of another embodiment of the present invention;
Figure 10 is an explanatory view of another embodiment of the present invention;
Figure 11 is an explanatory view of another embodiment of the present invention;
Figure 12 is an explanatory view of a conventional curvilinear guide bearing;
Figure 13 is a sectional view taken along a cut portion I-I of Figure 12;
Figure 14 is an explanatory view of a conventional curvilinear guide bearing;
Figure 15 is a sectional view taken along a cut portion II-II of Figure 14;
Figure 16 is an explanatory view of a conventional curvilinear guide bearing;
Figure 17 is an explanatory view of a conventional curvilinear guide bearing.

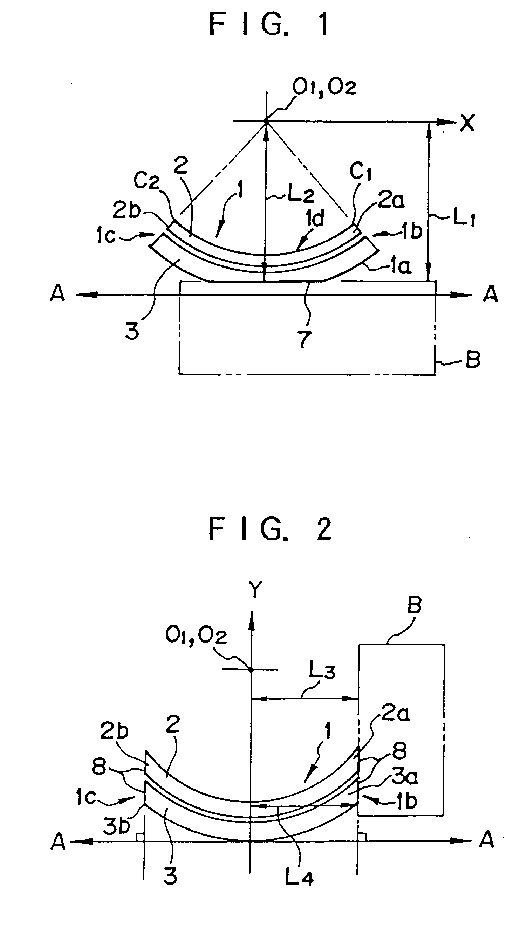

A detailed explanation will be given of embodiments of a curvilinear guide bearing according to the present invention in reference to Figure 1 through Figure 8 as follows.

The basic structure of curvilinear guide bearings as illustrated in Figure 1 through Figure 3, for example, that the curvilinear guide main body 1 in a circular arc shape is constituted by the inner ring member 2 and the outer ring member 3 disposed at the external side thereof, that the outer ring member 3 is slidably engaged with the inner ring member 2 and the like, is the same as that in the conventional example and therefore, the same members are attached with the same notations and a detailed explanation thereof will be omitted.

The curvilinear guide bearing as shown by Figure 1 is provided with a parallel plane portion 7 as the erection reference plane portion and the parallel plane portion 7 is provided at an external side circular arc face la of the curvilinear guide main body 1, that is, at the outer ring member 3.

Such a parallel plane portion 7 is formed by partially flatting the curvilinear guide main body 1 and is provided in parallel with a circular arc tangent A-A of the curvilinear guide main body 1. Incidentally, the circular arc tangent A-A of the curvilinear guide main body 1 is assumed to be equal to the circular arc tangent of the outer ring member 3 or the inner ring member 2.

Next, an explanation will be given of an example of using the curvilinear guide bearing constituted as above in reference to Figure 1.

In integrating the curvilinear guide bearing, when it is integrated to a portion of a swivelling device and is used for swivelling a table around a predetermined swivelling centre 0₁ of the swivelling device, it is integrated to the swivelling device with the parallel plane portion 7 as the erection reference.

That is, in integrating the curvilinear guide bearing to the swivelling device, a well-known reference block B is set in parallel with a co-ordinate axis (an axial line in parallel with a circular arc tangent of a swivelling locus) X with the swivelling centre 0₁ as the reference as shown by Figure 1, and thereafter, an operation in which the parallel plane portion 7 of the curvilinear guide main body 1 is brought into contact with the reference block B and an arc centre 0₂ of the curvilinear guide main body 1 is brought into agreement with the swivelling centre 0₁ based on the parallel plane portion 7, is carried out.

In this case the position for setting the reference block B is rendered a position in which a length L₁ from the reference block B to the co-ordinate axis X is equal to a length L₂ from the arc centre 0₂ of the curvilinear guide main body 1 to the parallel plane portion 7.

The curvilinear guide bearing in this embodiment is provided with the parallel plane portion 7 as the erection reference in integrating it to the swivelling device. Therefore, in an operation whereby the arc centre 0₂ of the curvilinear guide main body 1 is brought into agreement with the swivelling centre 0₁ of the swivelling device, the determination of the position of X in a step of moving the curvilinear guide main body 1 in X direction can be carried out based on the parallel plane portion 7. Therefore, the agreement operation is facilitated, it is easy to use and the integrating operation can be finished in a short period of time.

The curvilinear guide bearing illustrated in Figure 2 is provided with vertical plane portions 8 in the curvilinear guide main body 1 as the erection reference plane portions and the vertical plane portions 8 are provided at both end portions 1b and 1c of the curvilinear guide main body 1, that is, the both end portions 2a, 2b, 3a and 3b of the inner and outer ring members 2 and 3.

Such vertical plane portions 8 are formed by flattening portions of the curvilinear main body 1 and are provided orthogonally to the circular arc tangent A-A of the curvilinear guide main body 1. Incidentally, the circular arc tangent A-A of the curvilinear guide main body 1 is equal to the circular arc tangent of the outer ring member 3 or the inner ring member 2, as in the above-mentioned embodiment.

When the curvilinear guide bearing having the above-mentioned structure is integrated to a portion of a swivelling device and is used for swivelling a table around the predetermined swivelling centre 0₁ of the swivelling device, the operation of integrating it to the swivelling device is carried out with the vertical plane portions 8 as the erection reference.

That is, according to the curvilinear guide bearing, a well-known reference block B is set in parallel with a co-ordinate axis (an axial line orthogonal to the circular arc tangent of the swivelling locus) Y with the swivelling centre 0₁ as the reference as shown by Figure 2 and thereafter, an operation in which the vertical plane portion 8 of the curvilinear guide main body 1 is brought into contact with the reference block B and the arc centre 0₂ of the curvilinear guide main body 1 is brought into agreement with the swivelling centre 0₁ based on the vertical plane portion 8, is carried out.

In this case, the position for setting the reference block is rendered a position in which a length L₃ from the reference block B to the co-ordinate axis Y is equal to a length L₄ from the end portion 1b of the curvilinear guide main body 1 to the centre thereof.

According to the curvilinear guide bearing of this embodiment, the vertical plane portions 8 are provided as the erection reference in integrating it to the swivelling device. Therefore, in the operation of bringing the arc centre 0₂ of the curvilinear guide main body 1 into agreement with the swivelling centre 0₁ of the swivelling device, the determination of the position of Y in the step of moving the curvilinear guide main body 1 in Y direction can be carried out based on the vertical plane portions 8. Accordingly, the agreement operation is facilitated, it is easy to use and the integrating operation can be finished in a short period of time.

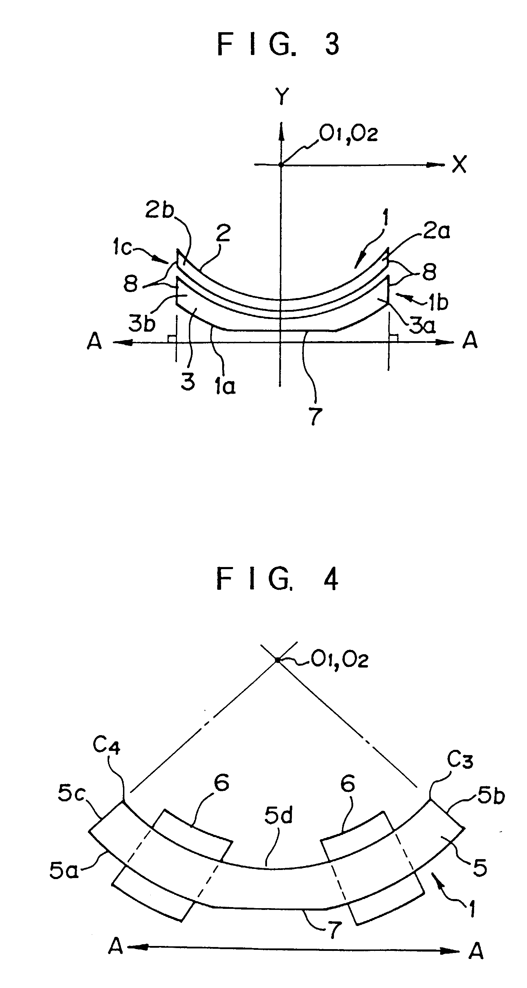

The curvilinear guide bearing illustrated in Figure 3 is provided with both of the parallel plane portion 7 and the vertical plane portions 8 as the erection reference plane portion. Incidentally, the structure of the plane portions 7 and 8 are the same as those in the above-mentioned embodiments and therefore, a detailed explanation thereof will be omitted.

When the curvilinear guide bearing having such a constitution is integrated into a portion of a swivelling device and is used for swivelling a table around the predetermined swivelling centre 0₁ of the swivelling device, the operation of integrating it to the swivelling device can be carried out with both of the parallel plane portion 7 and the vertical plane portions 8 as the erection reference. Incidentally, the integrating operation based on the parallel plane portion 7 and the integrating operation based on the vertical plane portions 8 are the same as those in those in the above-mentioned embodiments and accordingly, a detailed explanation thereof will be omitted.

Curvilinear guide bearings illustrated in Figure 4 through Figure 6 are different from the above-mentioned embodiments and the curvilinear guide main body 1 is constituted by the curvilinear rail 5 and rail carrier member 6. However, the slidable engagement of the rail carrier portion 6 with the curvilinear rail 5 and the like are the same as those in the conventional example and therefore, a detailed explanation thereof will be omitted.

The curvilinear guide bearing illustrated in Figure 4 is provided with the parallel plane portion 7 at a portion of the curvilinear rail 5 as the erection reference plane portion and the parallel plane portion 7 is formed by flattening a portion of an external side circular arc face 5a of the curvilinear rail 5 and is provided in parallel with a circular arc tangent A-A of the curvilinear rail 5.

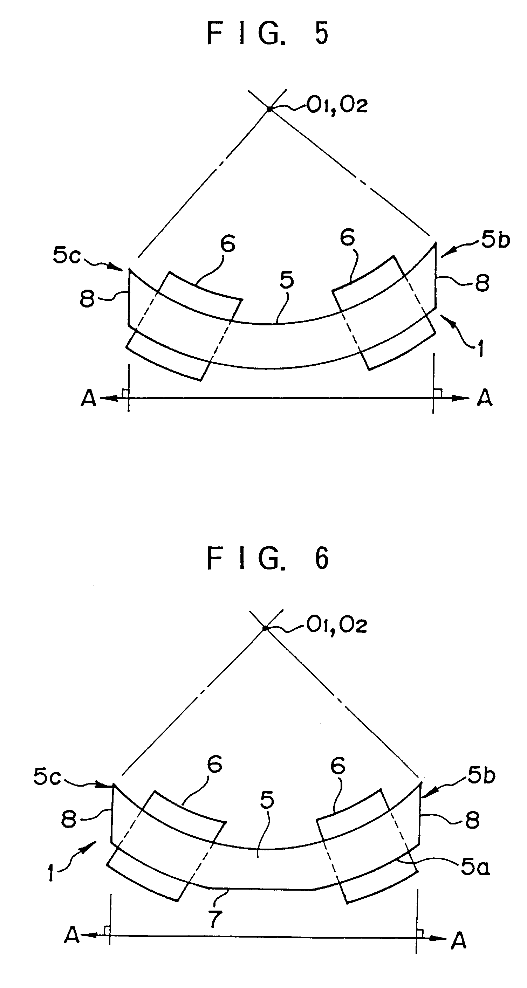

The curvilinear guide bearing illustrated in Figure 5 is provided with the vertical plane portions 8 at portions of the curvilinear rail 5 as the erection reference plane portion and the vertical plane portions 8 are provided at both end portions 5b and 5c of the curvilinear rail 5 and are formed orthogonally to the circular arc tangent A-A of the curvilinear rail 5.

The curvilinear guide bearing illustrated in Figure 6 is provided not only with the parallel plane portion 7 at the external side circular arc face 5a of the curvilinear rail 5 but with the vertical plane portions 8 at the both end portions 5b and 5c of the curvilinear rail 5. Incidentally, the structures of the parallel plane portion 7 and the vertical plane portions 8 are the same as those in the above-mentioned embodiments and therefore, a detailed explanation thereof will be omitted.

Also, with regards to the curvilinear guide bearings of Figure 4 through Figure 6, when they are integrated into a portion of a swivelling device and are used for swivelling a table around the predetermined swivelling centre 0₁ of the swivelling device, the operation of integrating it to the swivelling device can be carried out with the parallel plane portion 7 of the vertical plane portions 8 as the erection reference as in the above-mentioned embodiments. That is, the operation of bringing the arc centre 0₂ of the curvilinear rail 5 into agreement with the swivelling centre 0₁ can be carried out based on the parallel plane portion 7 or the vertical plane portions 8. Therefore, the agreement operation is facilitated, it is easy to use and the integrating operation can be finished in a short period of time.

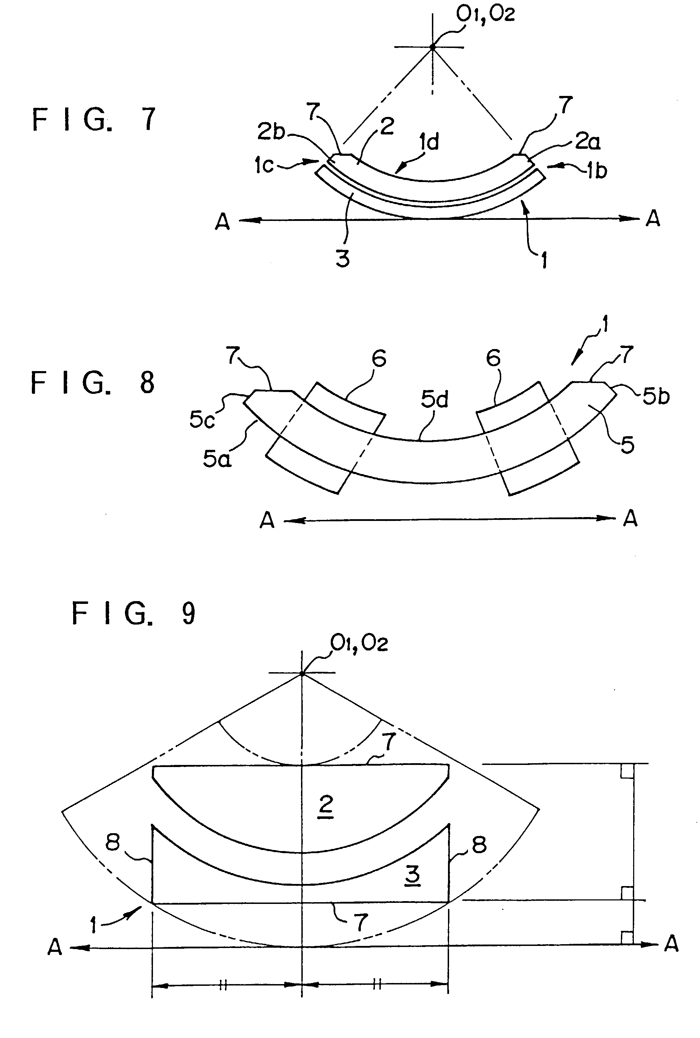

Further, although the parallel plane portion 7 is provided at the outer ring member 3 in the embodiments of Figure 1 and Figure 3, the parallel plane portion(s) 7 may be formed at both of the outer ring member 3 and the inner ring member 2 or only at the inner ring member 2. When the parallel plane portions 7 are provided at the inner ring member 2, as shown by Figure 7, two of the parallel plane portions 7 may be provided at a boundary between the one end portion 1b of the curvilinear guide main body 1 and the inner side circular arc face 1d (an inner corner portion C₁ on the side of the one end portion 2a of the inner ring member (refer to Figure 1) and at a boundary between the other end portion 1c of the curvilinear guide main body 1 and the inner side circular arc face 1d (an inner corner portion C₂ on the side of the other end portion 2b of the inner ring portion (refer to Figure 1)) or one of them may be provided at either of the above-mentioned two corner portions C₁ and C ₂.

Although the vertical plane portions 8 are provided at the end portions 2a, 2b, 3a and 3b on both sides of the inner and outer ring members 2 and 3 in the embodiments of Figure 2 and Figure 3, such vertical plane portions 8 may be provided at only the one end portion 2a or only the other end portion 2b in the inner and outer ring members 2 and 3 or may be provided not at both of the inner and outer ring members 2 and 3 but at only one of them.

Although the parallel plane portion 7 is provided at the external side circular arc face 5a of the curvilinear rail 5 in the embodiments of Figure 4 and Figure 6, two of the parallel plane portions 7 may be provided at a boundary between the one end portion 5b of the curvilinear rail 5 and the inner side circular arc face 5d (an inner corner portion C₃ of the end portion 5b of the curvilinear rail (refer to Figure 4)) and a boundary between the other end portion 5c of the curvilinear rail 5 and the inner side circular arc face 5d (an inner corner portion C₄ of the end portion 5c of the curvilinear rail (refer to Figure 4)) as shown by Figure 8, one of them may be provided at either of the both corner portions C₃ and C₄.

Although the vertical plane portions 8 are provided at both end portions 5b and 5c of the curvilinear rail 5 in the embodiments of Figure 5 and Figure 6, one of the vertical plane portions 8 may be formed only at one end portion 5b of the curvilinear rail 5 or at only the other end portion 5c thereof.

According to a curvilinear guide bearing illustrated in Figure 9, the curvilinear guide main body 1 is formed in a box-like shape having no curved faces by the parallel plane portions 7 and the vertical plane portions 8, that is, not only a portion but a total of the curvilinear guide main body 1 is provided as the erection reference plane portion.

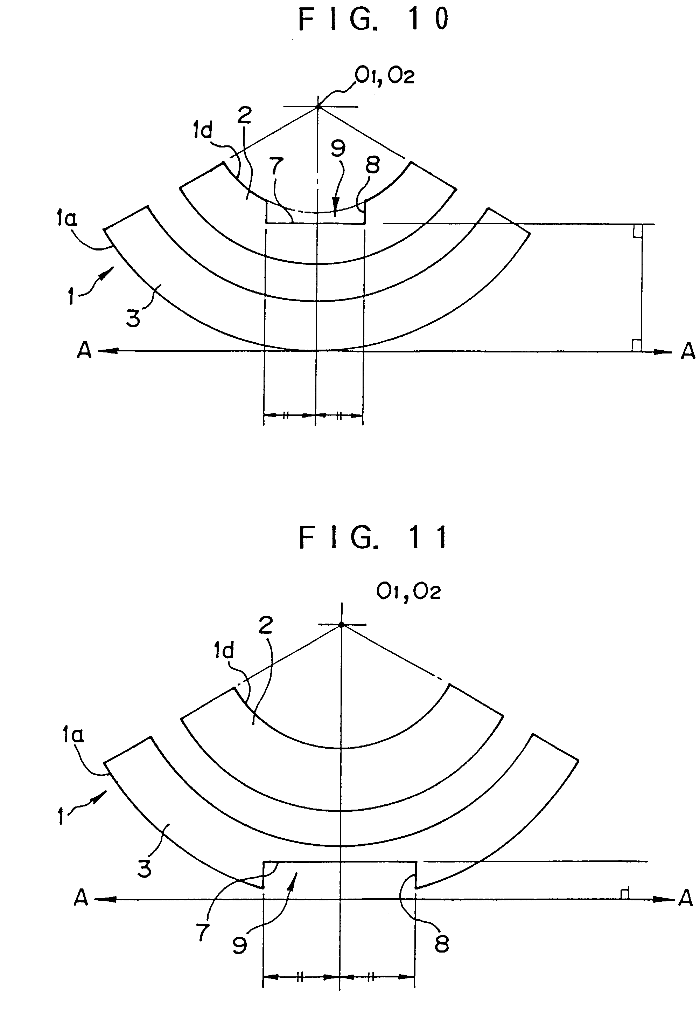

According to a curvilinear guide bearing illustrated in Figure 10, a recess portion 9 is provided at a portion of the curvilinear guide main body 1, the bottom face of the recess portion is constituted as the parallel plane portion 7 and the side faces of the recess portion are constituted as the vertical plane portions 8. That is, the bottom face of the recess portion 9 is provided in parallel with the circular arc tangent A-A of the curvilinear guide main body 1 and the side faces of the recess portion 9 are provided orthogonally to the circular arc tangent A-A.

Although such a recess portion 9 is cut at the inner side circular arc face 1d of the curvilinear guide main body 1, that is, the inner ring member 2, it may be formed at the outer side circular arc face la of the curvilinear guide main body 1, that is, the outer ring member 3 as shown by Figure 11.

According to the curvilinear guide bearings in the above-mentioned embodiments, each of them is provided with the plane portions (parallel plane portions 7 or the vertical plane portions 8) as the erection reference in integrating it to a swivelling device and the operation of integrating it to the swivelling device can be carried out with the plane portions as the erection reference.

In the curvilinear guide bearing according to the present invention, the plane portion is provided as the erection reference in integrating it to a swivelling device. Accordingly, since the operation of integrating it to the swivelling device can be carried out with the plane portion as the erection reference, the integrating operation is facilitated, the easiness in using it is promoted and shortening of time period of the integrating operation can be achieved.

The aforegoing description has been given by way of example only and it will be appreciated by a person skilled in the art that modifications can be made without departing from the scope of the present invention.

## Claims

1. A curvilinear guide bearing comprising a curvilinear main body (1) for guiding swivelling operation of an object and having a circular arc-shaped portion (2;3;5), a further portion (3;2;6) and means for slidably engaging the portions, characterised in that the main body (1) comprises a plane portion (7;8) as a reference for integrating the guide bearing with the object.

2. A bearing as claimed in claim 1, wherein the reference plane portion comprises a parallel plane portion (7) in parallel with a circular arc tangent (A-A) of the curvilinear guide main body (1).

3. A bearing as claimed in claim 2 wherein the parallel plane portion (7) is a flattened portion of the curvilinear guide main body (1) in parallel with the circular arc tangent (A-A) of the curvilinear guide main body (1).

4. A bearing as claimed in claim 2 or 3, wherein a recess portion (9) is provided at a portion of the curvilinear guide main body (1) and a bottom face of the recess portion (9) is provided as the parallel plane portion (7).

5. A bearing as claimed in any preceding claim, wherein the reference plane portion comprises a vertical plane portion (8) orthogonal to a circular arc tangent (A-A) of the curvilinear guide main body (1).

6. A bearing as claimed in claim 5, wherein the vertical plane portion (8) is a flattened portion of the curvilinear guide main body (1) orthogonal to the circular arc tangent (A-A) of the curvilinear guide main body (1).

7. A bearing as claimed in claim 5 or 6, wherein a recess portion (9) is provided at a portion of the curvilinear guide main body (1) and a side face of the recess portion is provided as the vertical plane portion (8).

8. A bearing as claimed in claim 5 or 6, wherein the vertical plane portion (8) is provided at either or both of two end portions of the curvilinear guide main body (1).

9. A bearing as claimed in any preceding claim, wherein the circular arc-shaped portion is a curvilinear rail (5) and the further portion is a rail carrier member (6).

10. A bearing according to claim 9 when dependent upon claim 2 or 3, wherein the parallel plane portion (7) is provided at an external side circular arc face of the curvilinear rail (5) or at a boundary between at least either one of two end portions of the curvilinear rail (5) and an inner side circular arc face of the curvilinear rail (5).

11. A bearing according to any of claims 1 to 8 wherein the portions of the curvilinear main body (1) are an inner ring member (2) and an outer ring member (3) disposed external to the inner ring member (2).

12. A bearing as claimed in claim 11, when dependent upon any of claims 2 to 4, wherein the parallel plane portion (7) is provided at either or both of the inner ring member (2) or the outer ring member (3) of the curvilinear guide main body (1).
